Europäisches Patentamt

European Patent Office

Office européen des brevets

(19)

(11) Publication number: **0 377 122 B1**

## EUROPEAN PATENT SPECIFICATION

(12)

(45) Date of publication of patent specification: **28.06.95**　(51) Int. Cl.6: **C09K 5/04**, C10M 107/34

(21) Application number: **89122155.8**

(22) Date of filing: **01.12.89**

Divisional application 94115513.7 filed on 01/12/89.

The file contains technical information submitted after the application was filed and not included in this specification

(54) **Use of a specific polyoxyalkylene-glycol derivative as a lubricant for compression-type refrigerators and a method for effecting lubrication and a compression-type refrigerator system comprising it.**

(30) Priority: **06.12.88 JP 306920/88**
**13.12.88 JP 313053/88**
**06.03.89 JP 51875/89**
**07.03.89 JP 52822/89**
**31.03.89 JP 78171/89**
**21.04.89 JP 100186/89**

(43) Date of publication of application:
**11.07.90 Bulletin 90/28**

(45) Publication of the grant of the patent:
**28.06.95 Bulletin 95/26**

(84) Designated Contracting States:
**AT BE CH DE ES FR GB GR IT LI LU NL SE**

(56) References cited:
**EP-A- 0 336 171**
**EP-A- 0 343 662**
**DE-A- 2 943 446**
**US-A- 2 717 242**
**US-A- 4 755 316**

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Kawaguchi, Yasuhiro Idemitsu Kosan Co., Ltd.**
**1280, Kamiizumi**
**Sodegaura-machi**
**Kimitsu-gun**
**Chiba-ken (JP)**
Inventor: **Shimizu, Nobuaki Idemitsu Kosan Co., Ltd.**
**1280, Kamiizumi**
**Sodegaura-machi**
**Kimitsu-gun**
**Chiba-ken (JP)**

**EP 0 377 122 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**DERWENT FILE SUPLIER JAPS, Patent Office of Japan, Tokyo, JP; JP-A-55 161 895(HITACHI)**

**DERWENT FILE SUPLIER JAPS, Patent Office of Japan, Tokyo, JP; JP-A-58 103 594(NIPPON KOGYO)**

Inventor: **Kaneko, Masato Idemitsu Kosan Co., Ltd.**
**24-4, Anesakikaigan**
**Ichihara-shi**
**Chiba-ken (JP)**
Inventor: **Nagakawa, Hiroshi Idemitsu Kosan Co., Ltd.**
**1-1, Marunouchi 3-chome**
**Chiyoda-ku**
**Tokyo (JP)**

(74) Representative: **Türk, Gille, Hrabal, Leifert**
**Brucknerstrasse 20**
**D-40593 Düsseldorf (DE)**

2

## Description

Background of the Invention

1. Field of the Invention

The present invention relates to a lubricating oil for refrigerators with compressor (compression-type refrigerators), comprising as the main component a specific polyoxyalkyleneglycol derivative of formula (I) following below having a high lubricating property as well as a favorable compatibility with 1,1,1,2-tetrafluoroethane (hereinafter referred to as Flon 134a), which can substitute for flon compounds such as dichlorodifluoromethane (hereinafter referred to as Flon 12) used as refrigerant and involved in environmental pollution problems. More particularly, it relates to the use of at least one polyoxyalkyleneglycol derivative represented by the general formula (I) following below and having a viscosity at 100°C of from 2 to 50 $mm^2s^{-1}$ (cSt) as a lubricant for compression-type refrigerators in which 1,1,1,2-tetrafluoroethane is used as refrigerant as well as a method for effecting lubrication in compression-type refrigerators using this specific polyoxyalkyleneglycol derivative as a lubricant and a compression-type refrigerator system comprising this specific polyoxyalkyleneglycol derivative.

## 2. Description of the Related Art

Generally, a compression-type refrigerator is constituted of a compressor, a condenser, expansion bulbs, and an evaporator, having a mechanism where the mixture of the refrigerant and the lubricating oil is circulating in a closed system. In such a refrigerator, though it depends on the kind of apparatus, usually the temperature in the compressor rises to 40°C or more, while in the cooler, the temperature comes to be so low as -40°C. Accordingly, the refrigerant and the lubricating oil must circulate in the said system without phase separation in the said temperature range of -40°C to +40°C in most cases.

If phase separation is caused while the running of the refrigerator, a seriously detrimental effect occurs affecting the life and efficiency of the apparatus. For example, if phase separation of the refrigerant and the lubricating oil is caused in the compressor, moving parts become underlubricated resulting in seizure or other troubles, which shorten the life of the apparatus considerably. If phase separation is caused in the evaporator, a lubricating oil having a high viscosity results, which brings lowering of efficiency in heat exchange.

Since a lubricating oil for refrigerators is used for the purpose of lubricating the moving parts of the refrigerator, its lubricating ability is regarded important as a matter of course. Particularly in the compressor, the temperature becomes so high that a viscosity, sufficient to retain the oil film necessary for lubricating, is important. Necessary viscosity varies with the kinds or running conditions of the compressor, but usually the preferable viscosity of the lubricating oil before blended with refrigerant is 2 to 250 $mm^2 \cdot s^{-1}$ (cSt) at 100°C. If the viscosity is lower than that range, the oil film becomes thinner thereby causing underlubricating and sealing properties become poor, while if the viscosity is higher than the above, the efficiency in heat exchange is reduced. Since lubricating oils for refrigerator are used in circulation in a wide range of high to low temperatures, its viscosity index is preferably high, and usually a viscosity index of 40 or more is required. Further, in addition to the above properties, a low hygroscopicity to prevent the blocking of the bulb caused by icing at the expansion bulb and other properties are required.

Heretofore, as the refrigerant for compression-type refrigerators, Flon 12 has often been used, and as the lubricating oil, various mineral oils and synthetic oils satisfying the required properties mentioned before have been used. Flon 12, however, has recently been restricted more and more severely all over the world, for it is liable to cause environmental pollution including destruction of the ozonosphere.

In these circumstances, hydrogen-containing Flon compounds including Flon 134a have attracted attention, as new refrigerants. Among the hydrogen-containing Flon compounds, Flon 134a especially has only a small possibility of destroying the ozonosphere, and can substitute for Flon 12, with little change in structure of the conventional refrigerators, and accordingly is favorable as a refrigerant for compression-type refrigerators.

When the hydrogen-containing flon compounds including said Flon 134a are employed as the refrigerant for compression-type refrigerators in place of Flon 12, the desirable lubricating oils come to be those having high compatibility with the hydrogen-containing flon compounds including Flon 134a, and also having high lubricating properties enough to satisfy the required properties mentioned above.

However, since the conventional lubricating oils which have been used with Flon 12 do not have a favorable compatibility with the hydrogen-containing flon compounds including Flon 134a, a new lubricating oil suitable to these compounds consequently is required. In that case, particularly in the air-conditioner for automobiles, it is required that the construction of the mechanism be hardly changed on the occasion of substituting for Flon 12. It is not desirable to change widely the construction of the present mechanism because of lubricating oil. Accordingly, a lubricating oil having a very favorable compatibility with the hydrogen-containing flon compounds, including Flon 134a, is required.

As lubricating oils having compatibility with Flon 134a, Ulcon LB-165 or Ulcon LB-525 (Trade Mark, both produced by Union Carbide Co., Ltd.) composed of polyalkyleneglycol have been known, and it was reported that these lubricating oils are dissolved or compatible with Flon 134a in all proportions at a low temperature of -50°C or lower ("Research Disclosure", No. 17463 (October, 1978)). Moreover, a high viscosity refrigerator oil composition of which the base oil is poly-oxypropyleneglycolmonobutylether is known (JP-B-42119/1982).

These lubricating oils are polyalkyleneglycol derivatives having polypropylene glycol with a hydroxyl group at one of the terminals and a n-butyl ether bond (a n-butoxy group) at the other terminal. They have a comparatively favorable compatibility with Flon 134a at low temperatures, but they do not have sufficient compatibility with Flon 134a at high temperatures, and for example, Ulcon LB-525 mentioned above is known to cause phase separation with Flon 134a at room temperature (US-A-4,755,316).

On the other hand, a polyglycol having at least two hydroxyl groups in a molecule is proposed to be a favorable substance compatible with Flon 134a (US-A-4,755,316).

In the said polyglycol, however, the compatibility is not necessary sufficient.

Meanwhile, it is known that polyglycol generally shows a temperature dependency that when the mixture with Flon compound is heated from a low temperature to a high temperature, then the mixture phase-separated is once dissolved and phase-separated again.

On the other hand, Flon 134a and compounds which can dissolve it were proposed for use in absorption-type refrigerators (US-A-4 428 854). Said absorption-type refrigerators, however, are quite different in mechanism from the beforementioned compression-type refrigerators, and tetraethyleneglycoldimethylether described in the Examples of the above described reference is not proper as a lubricating oil for compression-type refrigerators because of its particularly low viscosity.

Lubricating oils for compression-type refrigerators comprising polyoxyalkyleneglycol monoethers are already known from DE-A-29 43 446. However, these polyoxyalkyleneglycol monoethers have a high hygroscopicity, a low critical solution temperature and a poor compatibility with Flon-134a and therefore are liable to cause undesired phase separation and blocking at the expansion bulb because of increase in moisture in the lubricant.

As described above, lubricating oils for compression-type refrigerators having sufficiently favorable compatibility with Flon 134a as well as high lubricating properties have not been found yet, and their development has been eagerly desired.

Replying to these requirements, the present inventors have earnestly studied to develop a lubricating oil suitable to compression-type refrigerators employing, as the refrigerant, Flon 134a which is able to substitute for Flon 12 now involved in environmental pollution problems and other flon compounds which are difficult to decompose.

Summary of the Invention

The object of the present invention is to provide a lubricating oil for compression-type refrigerators, having a favorable compatibility with Flon 134a as the refrigerant over the whole temperature range of application and also a high lubricating property as described above.

A further object of the present invention is to provide a lubricating oil for compression-type refrigerators, which has an excellent anti-seizure property in addition to the above described properties.

Surprisingly, it has been found that the object of the present invention can be achieved by the use of at least one polyoxyalkyleneglycol derivative represented by the general formula (I) following below and having a viscosity at 100°C of from 2 to 50 $mm^2s^{-1}$ (cSt) as a lubricant for compression-type refrigerators in which 1,1,1,2-tetrafluoroethane (Flon 134a) is used as refrigerant.

According to a first aspect the present invention relates to the use of at least one polyoxyalkyleneglycol derivative represented by the general formula:

4

$$R^1 \text{---} [ \text{---} ( OR^2 \text{---})_m \text{---} OR^3 ]_n \qquad \cdots \ (\text{I})$$

wherein
R¹     is an alkyl group having 1 to 10 carbon atoms, an acyl group having 1 to 10 carbon atoms or an aliphatic hydrocarbon group having 2 to 6 valencies,
R²     is an alkylene group having 2 to 4 carbon atoms,
R³     is an alkyl group having 1 to 10 carbon atoms, or an acyl group having 1 to 10 carbon atoms,
n      is an integer of 1 to 6, and
m      is a number for which the mean value of m x n is 6 to 80,
and having a viscosity at 100°C of from 2 to 50 mm²s⁻¹ (cSt)
as a lubricant for compression-type refrigerators in which 1,1,1,2-tetrafluoroethane is used as refrigerant.

According to preferred embodiments of the present invention there is used a polyoxyalkyleneglycol derivative of general formula (I), wherein n is 1 and R¹ und R³ are methyl groups, or wherein n is 1, m is at least 12 and R¹ and R³ are methyl groups, or wherein n is 1, m is at least 14 and R¹ and R³ are methyl groups.

According to a second aspect the present invention relates to a method for effecting lubrication in compression-type refrigerators using 1,1,1,2-tetrafluoroethane as a refrigerant which comprises employing as a lubricant a lubricating oil comprising, as a main component, at least one polyoxyalkyleneglycol derivative represented by the general formula:

$$R^1 \text{---} [ \text{---} ( OR^2 \text{---})_m \text{---} OR^3 ]_n \qquad \cdots \ (\text{I})$$

wherein
R¹     is an alkyl group having 1 to 10 carbon atoms, an acyl group having 1 to 10 carbon atoms or an aliphatic hydrocarbon group having 2 to 6 valencies,
R²     is an alkylene group having 2 to 4 carbon atoms,
R³     is an alkyl group having 1 to 10 carbon atoms, or an acyl group having 1 to 10 carbon atoms,
n      is an integer of 1 to 6, and
m      is a number for which the mean value of m x n is 6 to 80
and having a viscosity at 100°C in the range of from 2 to 50 mm²s⁻¹ (cSt).

According to a third aspect the present invention relates to a compression type refrigerator system which comprises a compressor, a refrigerant comprising 1,1,1,2-tetrafluoroethane, and a lubricant, said lubricant being a lubricating oil comprising, as a main component, at least one polyoxyalkyleneglycol derivative represented by the general formula:

$$R^1 \text{---} [ \text{---} ( OR^2 \text{---})_m \text{---} OR^3 ]_n \qquad \cdots \ (\text{I})$$

wherein
R¹     is an alkyl group having 1 to 10 carbon atoms, an acyl group having 1 to 10 carbon atoms or an aliphatic hydrocarbon group having 2 to 6 valencies,
R²     is an alkylene group having 2 to 4 carbon atoms,
R³     is an alkyl group having 1 to 10 carbon atoms, or an acyl group having 1 to 10 carbon atoms,
n      is an integer of 1 to 6, and
m      is a number for which the mean value of m x n is 6 to 80,
and having a viscosity at 100°C of from 2 to 50 mm²s⁻¹ (cSt)

### Description of preferred embodiments of the present invention

In the formula (I) $R^1$ is an alkyl group having 1 to 10 carbon atoms, an acyl group having 1 to 10 carbon atoms, or an aliphatic hydrocarbon group having 2 to 6 valencies, $R^2$ is an alkylene group having 2 to 4 carbon atoms, $R^3$ is an alkyl group having 1 to 10 carbon atoms, or an acyl group having 1 to 10 carbon atoms, n is an integer of 1 to 6, and m is a number, for which the mean value of m x n is 6 to 80.

Said alkyl group may be either of straight chain-, branched chain-, or cyclic alkyl group. Specific examples of the said alkyl groups are a methyl group, an ethyl group, a n-propyl group, an isopropyl group, various butyl groups, various pentyl groups, various hexyl groups, various heptyl group, various octyl groups, various nonyl groups, various decyl groups, a cyclopentyl group, a cyclohexyl group and the like. If the carbon number of said alkyl group is in excess of 10, the compatibility with Flon 134a is reduced, which causes phase separation. The preferable carbon number of alkyl groups is 1 to 6.

The alkyl group in the said acyl group may be either of straight chain-, branched chain-, or cyclic one. Specific examples of the alkyl group in the said acyl group are a methyl group, an ethyl group, an n-propyl group, an isopropyl group, various butyl groups, various pentyl groups, various hexyl groups, various heptyl groups, various octyl groups, various nonyl groups, a cyclopentyl group, and a cyclohexyl group.

If the carbon number of said acyl group is in excess of 10, the compatibility with Flon 134a is reduced, which causes phase separation. The preferable carbon number of the acyl group is 2 to 6.

When said $R^1$ and $R^3$ are each an alkyl group or an acyl group, $R^1$ and $R^3$ may be identical or different from each other.

Further, when n is 2 or more, plural $R^3$ in one molecule may be identical or different.

In case $R^1$ is an aliphatic hydrocarbon group having 1 to 10 carbon atoms and 2 to 6 valencies, said aliphatic hydrocarbon group may be a chain or a cyclic one. Examples of aliphatic hydrocarbon groups having two valencies are an ethylene group, a propylene group, a butylene group, a pentylene group, a hexylene group, a heptylene group, an octylene group, a nonylene group, a decylene group, a cyclopentylene group, and a cyclohexylene group. Examples of aliphatic hydrocarbon group having 3 to 6 valencies are residues resulting from removing a hydroxyl group from polyhydric alcohols such as trimethylol propane, glycerol, pentaerithritol, sorbitol, 1,2,3-trihydroxycyclohexane, and 1,3,5-trihydroxycyclohexane.

If the carbon number of said aliphatic hydrocarbon group is in excess of 10, the compatibility with Flon 134a is reduced, which causes phase separation. The preferable carbon number is 2 to 6.

In the beforementioned general formula (I), $R^2$ is an alkylene group having 2 to 4 carbon atoms, and as the oxyalkylene group of the repeating unit, an oxyethylene group, an oxypropylene group, and an oxybutylene group are specified. Oxyalkylene groups in one molecule may be identical or may vary in two or more kinds, but preferably at least an oxypropylene unit is contained in one molecule.

In the general formula (I), n is an integer of 1 to 6, and defined according to the number of valencies of $R^1$. For example, when $R^1$ is an alkyl group or an acyl group, n is 1. When $R^1$ is an aliphatic hydrocarbon group having 2,3,4,5 or 6 valencies, n comes to be 2,3,4,5 or 6, respectively. m is a number for which the mean value of m x n is 6 to 80, and if m is beyond the said range, the object of the present invention cannot attained sufficiently.

The general formula (I) means not only one kind of polyoxyalkyleneglycol derivatives but also a mixture of two or more kinds of the derivatives.

The polyoxyalkyleneglycol derivative represented by the general formula (I) used according to the present invention in the said Lubricating Oil (herein referred to as "lubricating oil of the present invention) can be produced according to various methods shown below.

Method (A):

Alkyleneoxide having 2 to 4 carbon atoms including ethyleneoxide and propyleneoxide are polymerized with water or alkali hydroxide as an initiator, to obtain a polyoxyalkyleneglycol having hydroxyl groups at the both terminals, represented by the general formula:

$$H \quad (OR^2)_a \quad OH \qquad \cdots \quad (A_1)$$

wherein a is a number of which mean value is 6 to 80, and $R^2$ is as defined before. Subsequently, both the hydroxyl groups of said polyoxyalkyleneglycol are etherified or esterified or one of the hydroxyl group is etherificated and the other hydroxyl group is esterified to obtain a polyoxyalkyleneglycol derivative represented by the general formula:

$$R \text{---} (OR^2)_a \text{---} OR' \qquad \cdots (A_2)$$

wherein R and R' are each an alkyl group or an acyl group having 1 to 10 carbon atoms, and they may be identical or different each other, and $R^2$ and a are as defined above.

Method (B):

Alkylene oxide having 2 to 4 carbon atoms is polymerized with monohydric alcohol having 1 to 10 carbon atoms or an alkali metal salt thereof as an initiator, to obtain a polyoxyalkyleneglycol monoalkylether represented by the general formula:

$$R'' \text{---} (OR^2)_a \text{---} OH \qquad \cdots (B_1)$$

(wherein R'' is an alkyl group having 1 to 10 carbon atoms, and $R^2$ and a are as defined above), having an ether bond at one terminal and a hydroxyl group at the other terminal. Subsequently, the hydroxyl group of the polyoxyalkyleneglycol monoalkylether is etherified or esterified, to obtain a polyoxyalkyleneglycol derivative represented by the general formula:

$$R'' \text{---} (OR^2)_a \text{---} OR \qquad \cdots (B_2)$$

(wherein $R^2$, R, R'' and a are as defined above.)

Method (C):

Alkyleneoxide having 2 to 4 carbon atoms is polymerized with polyhydric alcohol having 2 to 6 valencies, and having 1 to 10 carbon atoms or alkali metal salt thereof as an initiator, to obtain a polyoxyalkyleneglycol derivative having a hydroxyl group at one terminal, represented by the general formula:

$$R''' \text{---} [\text{---} (OR^2)_b \text{---} OH]_c \qquad \cdots (C_1)$$

wherein R''' is an aliphatic hydrocarbon group having 1 to 10 carbon atoms and 2 to 6 valencies, c is an integer of 2 to 6, and b is a number, for which the mean value of b x c is 6 to 80, and $R^2$ is as defined above. Subsequently, the hydroxyl group of the resulting polyoxyalkyleneglycol derivative is etherified or esterified, to obtain a polyoxyalkyleneglycol derivative represented by the general formula:

$$R''' \text{---} [\text{---} (OR^2)_b \text{---} OR]_c \qquad \cdots (C_2)$$

(wherein $R^2$, R, R''', b and c are as defined above).

In these methods of production, in order to esterify the hydroxyl group of the polyoxyalkyleneglycol having a hydroxyl group at its terminal or derivatives thereof, usually performed are a method to react said substances with an aliphatic carboxylic acid having 1 to 10 carbon atoms or reactive derivatives such as acid anhydride, acid halide and ester thereof, or a method to convert the hydroxyl group of the said

EP 0 377 122 B1

polyoxyalkyleneglycol or derivatives thereof to sulfonates or halides, which are reacted with said carboxylic acid or salt thereof.

Examples of said carboxylic acid are formic acid, acetic acid, propionic acid, butyric acid, valeric acid, caproic acid, caprylic acid, capric acid, and cyclohexanecarboxylic acid.

When esterification is effected by the use of said carboxylic acid or acid anhydride thereof or by transesterification using the ester of said carboxylic acid, acid catalysts such as sulfuric acid and p-toluene sulfonic acid are usually used. When esterification is effected with the use of acid halides, usually amines are used as the dehydrohalogenating agent.

On the other hand in order to etherify the hydroxyl group of polyoxyalkyleneglycol having a hydroxyl group at its terminal or derivatives thereof, usually performed are a method to react them with alkali metals such as metallic sodium or alkali metal salts of lower alcohol such as sodium methoxide, to obtain alkali metal salt of said polyoxyalkyleneglycol or derivative thereof, and then react it with alkyl halide having 1 to 10 carbon atoms or sulfonates, or a method to transform the hydroxyl group of said polyoxyalkyleneglycol or a derivative thereof to sulfonate or halide, and then react them with aliphatic alcohol having 1 to 10 carbon atoms or alkali metal salts thereof.

In the polyoxyalkyleneglycol derivative thus obtained, the bonding style of the oxyalkylene unit is usually a head-tail bond in case of oxypropylene unit or oxybutylene unit, but head-head bonds and tail-tail bonds are also contained in some cases.

Lubricating Oil of the present invention comprises, as the main component, the polyoxyalkyleneglycol derivative thus obtained and represented by the general formula (I), and said polyoxyalkyleneglycol derivative may be used solely or two or more kinds of them may be used in combination. Said lubricating oil can be favorably used even if it contains, in addition to the beforementioned polyoxyalkyleneglycol derivative represented by the aforementioned general formula (I), a polyoxyalkyleneglycol derivative having hydroxyl group(s) at its terminals as long as the content of said hydroxyl groups is not more than 30 mol% of the total terminal groups.

The object of the present invention cannot be attained with polyoxyalkyleneglycol derivative wherein $R^1$ and $R^3$ are aromatic groups in the beforementioned general formula (I), though the reason for this is not clear.

Preferred are the polyoxyalkyleneglycol derivatives of the general formula (I) wherein n is 1, and $R^1$ and $R^3$ are methyl groups.

Lubricating Oil of the present invention has a viscosity at 100°C in the range of from 2 to 50 $mm^2 \cdot s^{-1}$ (cSt), preferably from 5 to 30 $mm^2 \cdot s^{-1}$ (cSt), more preferably 6 $mm^2 \cdot s^{-1}$ (cSt) (n = 1, m≒12 in the general formula (I)) to 30 $mm^2 \cdot s^{-1}$ (cSt), still more preferably 7 $mm^2 \cdot s^{-1}$ (cSt) (n = 1, m≒14) to 30 $mm^2 \cdot s^{-1}$ (cSt), and most preferably 9 $mm^2 \cdot s^{-1}$ (cSt) (n = 1, m≒19) to 30 $mm^2 \cdot s^{-1}$ (cSt) in order to retain the thickness of oil film necessary for lubricating and to maintain sufficient sealing properties. If necessary, to lubricating Oil of the present invention can be added, various additives used in conventional lubricating oils such as anti-load additives, chlorine capturing agents, antioxidants, metal deactivating agents, defoaming agents, detergent dispersants, viscosity index improvers, oiliness agents, antiwear additives, extreme pressure agents, rust inhibitors, anti-corrosion agents, and pour point depressants.

Abovementioned anti-load additives include organic sulfide-based additives such as monosulfides, polysulfides, sulfoxides, sulfones, thiosulfinates, sulfurized fats and oils, thiocarbonates, thiophenes, thiazols, methanesulfonic acid esters; phospate-based additives such as phosphoric monoesters, phosphoric diesters and phosphoric triesters (tricresyl phosphate); phosphite-based additives such as phosphorous monoesters, phosphorous diesters, and phosphorous triesters; thiophosphate-based additives such as thiophosphoric acid triesters; fatty acid-based additives such as higher fatty acid, hydroxyaryl fatty acids, carboxylic acid-containing polyhydric alcohol esters, and metal soap; fatty acid ester-based additives such as polyhydric alcohol esters and acrylic acid esters; organic chlorine-based additives such as chlorinated hydrocarbons and chlorinated carboxylic acid derivatives; organic fluorine-based additives such as fluorinated aliphatic acide, ethylene fluoride resins, fluoroalkyl polysiloxanes and fluorinatedgraphite; alcohol-based additives such as higher alcohols; and metallic compound-based additives such as naphthenates (lead naphthenate), fatty acid salts (fatty acid lead), thiophosphates (zinc dialkyldithiophosphate), thiocarbamates, organomolybdenum compounds, organic tin compounds, organogermanium compounds, and boric acid esters.

Chlorine capturing agents include compounds having glycidyl ether group, epoxyfatty acid monoesters, epoxy fats and oils and compounds having epoxycycloalkyl group.

Antioxidants include phenols (2,6-di-tert-butyl-p-cresol), aromatic amines (alpha-naphthylamine) and the like.

Metal deactivators include benzotriazole derivatives.

8

Defoaming agents include silicone oil (dimethylpolysiloxane), and polymethacrylates. Detergent dispersants include sulfonates, phenates, and succinimides.

Viscosity index improvers include polymethacrylate, polyisobutylene, ethylene-propylene copolymer, and hydrogenated styrene-diene copolymer.

Lubricating Oil of the present invention having a high compatibility with refrigerants as well as excellent lubricating ability is used for compression-type refrigerators employing Flon 134a as the refrigerant, since said lubricating oil has a good compatibility with Flon 134a, unlike the conventional lubricating oils. Moreover, the Lubricating Oil of the present invention can be used in mixture with another lubricating oil for compression-type refrigerators, with the purpose of improving its compatibility with refrigerants.

The lubricating oil of the present invention is excellent in compatibility with refrigerants and in lubricating property, and accordingly utilized as lubricating oil for various refrigerating machines using fluoroalkane (flon) refrigerant, including a compression-type refrigerators. Particularly, unlike the conventional lubricating oils, the lubricating oil of the present invention has good compatibility with 1,1,1,2-tetrafluoroethane (Flon-134a) This solubility is satisfactory throughout the whole temperature range.

Consequently, the lubricating oil of the present invention can be expected to be effectively used as a lubricating oil for refrigerators using Flon 134a as a refrigerant, a cooler (particularly car air-conditioner), a heat pump and the like. Also, this lubricating oil can be used by mixing with other lubricating oils for compression-type refrigerators.

The present invention is described in greater detail with reference to the following examples.

Preparation Example 1

In a 200-milliliter three-necked glass flask equipped with a stirrer and dropping funnel, 50 g of Unilube MB-11 (polyoxypropyleneglycol mono-n-butylether, average molecular weight: 1000) produced by Nippon Oil & Fats Co., Ltd., 9.5 g (0.12 mol) of pyridine and 100 ml of ethyl ether were placed and then, 9.4 g (0.12 mol) of acetyl chloride was added through a dropping funnel over 30 minutes, while stirring at room temperature. After heating and refluxing for 2 hours, the reaction mixture was cooled to room temperature, was transferred into a separating funnel and was washed five times with 50 ml of saturated brine each time. After the ether was distilled away, the residue was dried at 100°C for one hour at a reduced pressure with a vacuum pump to obtain 49.0 g of the desired acetate of Unilube MB-11.

Preparation Example 2

In a 300-milliliter three-necked glass flask eqipped with a stirrer and a distillation head, 75 g of Unilube MB-11 produced by Nippon Oil & Fats Co., Ltd., and 50 ml of toluene were placed, and 20 ml of toluene was distilled away to remove water content, while heating and stirring. Then, the distillation head was taken off, a cooler and a dropping funnel were attached, and thereafter 11.9 g (0.15 mol) of pyridine and 50 ml of toluene were added. While stirred at room temperature, 16.0 g (0.15 mol) of n-butyryl chloride was added through a dropping funnel over 30 minutes. After heating and refluxing for 4 hours, the reaction mixture was cooled to room temperature, was poured into a separating funnel and was washed five times with 50 ml of saturated brine each time. After toluene was distilled away, the residue was dried at 100°C for one hour at a reduced pressure with a vacuum pump to obtain 70.5 g of the desired n-butyric acid ester of Unilube MB-11.

Preparation Example 3

The same procedure was repeated as in Preparation Example 2 except that 16.0 g (0.15 mol) of isobutyryl chloride was used in place of n-butyryl chloride to obtain 74 g of isobutyric acid ester of Unilube MB-11.

Reference Example 1

The same procedure was repeated as in Preparation Example 1 except that 16.9 g (0.12 mol) of benzoyl chloride was used in place of acetyl chloride to obtain 57.0 g of benzoate of Unilube MB-11.

9

Reference Example 2

In a 200-milliliter three-necked glass flask equipped with a stirrer and a dropping funnel, 50 g of Unilube MB-11 produced by Nippon Oil & Fats Co., Ltd., 7.9 g (0.14 mol) of potassium hydroxide and 80 ml of toluene were placed, and then, 15.2 g (0.12 mol) of benzyl chloride was added through a dropping funnel over 30 minutes, while heating and refluxing toluene and stirring. Then the mixture was heated and refluxed for 4 hours, cooled to room temperature, and the reaction mixture was poured into a separating funnel and was washed five times with 50 ml of saturated brine each time. After toluene was distilled away, the residue was dried at 100°C for one hour at a reduced pressure (0.1 mmHg) with a vacuum pump to obtain 49.0 g of the desired benzyl ether of Unilube MB-11.

Preparation Example 4

In a 300-milliliter three-necked glass flask equipped with a stirrer and a distillation head, 65 g of polyoxypropyleneglycol mono-n-butylether (average molecular weight, 1120) and 70 ml of toluene were placed, and about 20 ml of toluene was distilled away to remove water content, while heating and stirring. After cooling, 25 g (0.13 mol) of methanol solution of sodium methoxide (28% by weight) was added and heated to distill away methanol and about 20 ml of toluene. After cooling, the distillation head was taken off, and a cooler and a dropping funnel were attached. Then 30 g (0.19 mol) of ethyl iodide was added through a dropping funnel over 30 minutes, while heating at 50°C and stirring. After heating and stirring at 50°C for one hour, at 70°C for 3 hours and a 105°C for 1.5 hours, the mixture was cooled to room temperature. Then, the reaction mixture was poured into a separating funnel and was washed five times with 50 ml of saturated brine each time. After toluene was distilled away, the residue was dried at 100°C for one hour at a reduced pressure with a vacuum pump to obtain 58 g of the desired ethylether derivative of polyoxypropyleneglycol mono-n-butylether.

Preparation Example 5

The same procedure was repeated as in Preparation Example 4 except that 65 g of polyoxypropyleneglycol (average molecular weight: 1100) having a hydroxyl group at each of both terminals was used in place of polyoxypropyleneglycol mono-n-butylether, and 50 g (0.27 mol) of ethanol solution of sodium methoxide (28% by weight) and 60 g (0.38 mol) of ethyl iodide were used to obtain 62 g of the desired polyoxypropyleneglycol ether.

Preparation Example 6

The same procedure was repeated as in Preparation Example 4 except that 65 g of polyoxypropyleneglycol (average molecular weight: 1000) derivative having three hydroxyl groups in a molecule obtained by polymerizing propylene oxide using a glycerol as an initiator in place of polyoxypropyleneglycol mono-n-butylether was used, and 50 g (0.26 mol) of methanol solution of sodium methoxide (28% by weight) and 90 g (0.58 mol) of ethyl iodide were used to obtain 61 g of the desired polyoxypropyleneglycol triethylether derivative.

Preparation Example 7

In a 300-milliliter three-necked glass flask equipped with a stirrer and a distillation head, 50 g of Sannix PP-1000 (polyoxypropyleneglycol having a hydroxyl group at each of both terminals, average molecular weight: 1000) produced by Sanyo Chemical Industries, Ltd. and 80 ml of toluene were placed, about 20 ml of toluene was distilled away to remove water content, while heating and stirring.

After cooling, 25 g (0.13 mol) of methanol solution of sodium methoxide (28% by weight) was added, and the mixture was heated to distill away methanol and about 20 ml of toluene.

After cooling, the content was poured into a 300 milliliter stainless steel autoclave equipped with a stirrer, and 36.8 g (0.26 mol) of methyl iodide was added and sealed. Then, the mixture was heated at 50°C to 70°C over 4.5 hours and reacted at 85°C for 4 hours. After cooling to room temperature, the reaction mixture was dissolved in the mixture of 100 ml of water and 200 ml of methanol, and was passed through a 200 ml column of cation-exchange resin, and then through a 200 ml column of anion-exchange resin.

10

After the solvent was distilled away, the residue was dried for one hour at a reduced pressure of 13,3 Pa (0.1 mmHg) with a vacuum pump to obtain 42.5 g of the desired dimethyl ether derivative of Sannix PP-1000. In the derivative, the infared absorption spectrum (3450 cm$^{-1}$) ascribable to a hydroxyl group was lost.

Preparation Example 8

The same procedure was repeated as in Preparation Example 7 except that 60 g of Nissan Uniol D-1200 (polyoxypropyleneglycol having a hydroxyl group at each of both terminals, average molecular weight: 1200) produced by Nippon Oil & Fats Co., Ltd. was used in place of Sannix PP-1000 to obtain 49 g of dimethylether derivative of Nissan Uniol D-1200. In the derivative, the infared absorption spectrum (3450 cm$^{-1}$) ascribable to a hydroxyl group was lost.

Examples 1 to 8, Comparative Examples 1 to 4

The compatibility with Flon 134a of the compounds obtained in Preparation Examples 1 to 8, Reference Examples 1 to 2, and polyglycol as the starting material of Preparation Examples 1 and 4 was measured.

A specified sample was added into a pressure glass ampule so that the amount of the sample would be 10% by weight or 20% by weight to Flon 134a (1,1,1,2-tetrafluoroethane), and this was jointed to a vacuum pipe and Flon 134a gas pipe. Afterwards, the ampule was subjected to vacuum degassing at a room temperature, and cooled with liquid nitrogen to take out the specified Flon 134a. Then, the ampule was sealed, heated from -40°C in a thermostat and the starting temperature of phase separation was measured. The higher phase separation temperature is preferable. The results were shown in Table 1

EP 0 377 122 B1

<u>Table 1</u>

| No. | Sample | From | Viscosity $mm^2 \cdot s^{-1}$(cSt) | | Viscosity Index | Starting Temperature of Phase Separation (°C) Ratio of polyglycol to 1,1,1,2-tetrafluoroethane (wt%) | |
|---|---|---|---|---|---|---|---|
| | | | 40°C | 100°C | | 10% | 20% |
| Example 1 | Acetate of Unilube MB-11 | Product of Preparation Example 1 | 48.23 | 9.77 | 194 | 71.0 | 74.0 |
| Example 2 | n-butyrate of Unilube MB-11 | Product of Preparation Example 2 | 46.72 | 9.96 | 207 | 66.5 | 66.5 |
| Example 3 | Isobutyrate of Unilube MB-11 | Product of Preparation Example 3 | 45.44 | 9.61 | 203 | 66.5 | 67.0 |
| Comparative Example 1 | Unilube MB-11 | Material of Preparation Example 1 | 56.10 | 10.8 | 187 | 51.5 | 54.0 |
| Comparative Example 2 | Benzoate of Unilube MB-11 | Product of Reference Example 1 | 72.03 | 12.58 | 175 | 15.0 | -3.0 |
| Comparative Example 3 | Benzyl ether of Unilube MB-11 | Product of Reference Example 2 | 49.35 | 9.90 | 192 | 32.0 | 28.5 |
| Example 4 | Ethylether derivative of monohydroxypolyoxypropyleneglycol | Product of Preparation Example 4 | 38.70 | 8.71 | 214 | 63.0 | 66.5 |
| Comparative Example 4 | Monohydroxypolyoxypropyleneglycol | Material of Preparation Example 4 | 53.0 | 10.06 | 180 | 55.5 | 57.5 |
| Example 5 | Ethylether derivative of dihydroxypolyoxypropyleneglycol | Product of Preparation Example 5 | 41.50 | 9.01 | 206 | 70.0 | 73.0 |
| Example 6 | Ethylether derivative of trihydroxypolyoxypropyleneglycol | Product of Preparation Example 6 | 40.76 | 8.10 | 177 | 73.0 | 74.5 |
| Example 7 | Methylether derivative of dihydroxypolyoxypropyleneglycol | Product of Preparation Example 7 | 32.0 | 7.50 | 214 | 79.5 | 80.5 |
| Example 8 | Methylether derivative of dihydroxypolyoxypropyleneglycol | Product of Preparation Example 8 | 47.56 | 9.70 | 195 | 70.5 | 70.5 |

**Claims**

1. Use of at least one polyoxyalkyleneglycol derivative represented by the general formula:

$$R^1 \text{---} [ \text{---} ( OR^2 \text{---} )_m \text{---} OR^3 ]_n$$

(I)

wherein

R¹    is an alkyl group having 1 to 10 carbon atoms, an acyl group having 1 to 10 carbon atoms or an aliphatic hydrocarbon group having 2 to 6 valencies,

R²    is an alkylene group having 2 to 4 carbon atoms,

R³    is an alkyl group having 1 to 10 carbon atoms, or an acyl group having 1 to 10 carbon atoms,

n    is an integer of 1 to 6, and

m    is a number for which the mean value of m x n is 6 to 80,

and having a viscosity at 100 °C of from 2 to 50 mm²s⁻¹ (cSt)

as a lubricant for compression-type refrigerators in which 1,1,1,2-tetrafluoroethane is used as refrigerant.

2. The use according to claim 1 wherein n is 1 and R¹ and R³ are methyl groups.

3. The use according to claim 1 wherein n is 1, m is at least 12 and R¹ and R³ are methyl groups.

4. The use according to claim 1 wherein n is 1, m is at least 14 and R¹ and R³ are methyl groups.

5. A method for effecting lubrication in compression-type refrigerators using 1,1,1,2-tetrafluoroethane as a refrigerant which comprises employing as a lubricant a lubricating oil comprising, as a main component, at least one polyoxyalkyleneglycol derivative represented by the general formula:

$$R^1 \text{---} [ \text{---} ( OR^2 \text{---} )_m \text{---} OR^3 ]_n$$

... (I)

wherein

R¹    is an alkyl group having 1 to 10 carbon atoms, an acyl group having 1 to 10 carbon atoms or an aliphatic hydrocarbon group having 2 to 6 valencies,

R²    is an alkylene group having 2 to 4 carbon atoms,

R³    is an alkyl group having 1 to 10 carbon atoms, or an acyl group having 1 to 10 carbon atoms,

n    is an integer of 1 to 6, and

m    is a number for which the mean value of m x n is 6 to 80

and having a viscosity at 100 °C in the range of from 2 to 50 mm²s⁻¹ (cSt).

6. A compression-type refrigerator system which comprises a compressor, a refrigerant comprising 1,1,1,2-tetrafluoroethane, and a lubricant, said lubricant being a lubricating oil comprising, as a main component, at least one polyoxyalkyleneglycol derivative represented by the general formula:

$$R^1 \text{---} [ \text{---} ( OR^2 \text{---} )_m \text{---} OR^3 ]_n$$

... (I)

wherein

R¹    is an alkyl group having 1 to 10 carbon atoms, an acyl group having 1 to 10 carbon atoms or

EP 0 377 122 B1

an aliphatic hydrocarbon group having 2 to 6 valencies,
$R^2$ is an alkylene group having 2 to 4 carbon atoms,
$R^3$ is an alkyl group having 1 to 10 carbon atoms, or an acyl group having 1 to 10 carbon atoms,
n is an integer of 1 to 6, and
m is a number for which the mean value of m x n is 6 to 80,
and having a viscosity at 100°C of from 2 to 50 $mm^2s^{-1}$ (cSt).

## Patentansprüche

1. Verwendung mindestens eines Polyoxyalkyleneglycolderivats der allgemeinen Formel:

$$R^1 \text{--} [\text{--}(\,O\,R^2\,)_m\text{--}OR^3\,]_n \qquad (I)$$

worin bedeuten:
$R^1$ eine Alkylgruppe mit 1 bis 10 Kohlenstoffatomen, eine Acylgruppe mit 1 bis 10 Kohlenstoffatomen oder eine aliphatische Kohlenwasserstoffgruppe mit 2 bis 6 Valenzen,
$R^2$ eine Alkylengruppe mit 2 bis 4 Kohlenstoffatomen,
$R^3$ eine Alkylgruppe mit 1 bis 10 Kohlenstoffatomen oder eine Acylgruppe mit 1 bis 10 Kohlenstoffatomen,
n eine ganze Zahl von 1 bis 6 und
m eine Zahl, für welche der Mittelwert von m x n 6 bis 80 beträgt,
das eine Viskosität bei 100°C von 2 bis 50 $mm^2/s$ (cSt) aufweist,
als Schmiermittel für Kompressions-Kühlanlagen (-Kühlschränke), in denen 1,1,1,2-Tetrafluoroethan als Kühlmittel (Kältemittel) verwendet wird.

2. Verwendung nach Anspruch 1, worin n = 1 und $R^1$ und $R^3$ für Methylgruppen stehen.

3. Verwendung nach Anspruch 1, worin n = 1, m = mindestens 12 und $R^1$ und $R^3$ für Methylgruppen stehen.

4. Verwendung nach Anspruch 1, worin n = 1, m = mindestens 14 und $R^1$ und $R^3$ für Methylgruppen stehen.

5. Verfahren zur Erzielung einer Schmierung in Kompressions-Kühlanlagen bzw. -Kühlschränken, in denen 1,1,1,2-Tetrafluoroethan als Kühlmittel (Kältemittel) verwendet wird, das umfaßt die Verwendung eines Schmieröls, das als eine Hauptkomponente enthält mindestens ein Polyoxyalkylenglycolderivat der allgemeinen Formel:

$$R^1 \text{--} [\text{--}(\,O\,R^2\,)_m\text{--}OR^3\,]_n \qquad \cdots \ (I)$$

worin bedeuten:
$R^1$ eine Alkylgruppe mit 1 bis 10 Kohlenstoffatomen, eine Acylgruppe mit 1 bis 10 Kohlenstoffatomen oder eine aliphatische Kohlenwasserstoffgruppe mit 2 bis 6 Valenzen,
$R^2$ eine Alkylengruppe mit 2 bis 4 Kohlenstoffatomen,
$R^3$ eine Alkylgruppe mit 1 bis 10 Kohlenstoffatomen oder eine Acylgruppe mit 1 bis 10 Kohlenstoffatomen,
n eine ganze Zahl von 1 bis 6 und
m eine Zahl, für welche der Mittelwert von m x n 6 bis 80 beträgt,
das eine Viskosität bei 100°C in dem Bereich von 2 bis 50 $mm^2/s$ (cSt) aufweist, als Schmiermittel.

14

**6.** Kompressor-Kühlanlage bzw. -Kühlschrank, die (der) umfaßt einen Kompressor, ein Kühlmittel (Kältemittel) aus 1,1,1,2-Tetrafluoroethan und ein Schmiermittel, wobei es sich bei dem Schmiermittel handelt um ein Schmieröl, das als eine Hauptkomponente enthält mindestens ein Polyoxyalkylenglycolderivat der allgemeinen Formel

$$R^1 \!\!-\!\! [\!\!-\!\!(OR^2\!\!-\!\!)_{\overline{m}}\!\!-\!\!OR^3]_n \quad \ldots \quad (I)$$

worin bedeuten:

$R^1$      eine Alkylgruppe mit 1 bis 10 Kohlenstoffatomen, eine Acylgruppe mit 1 bis 10 Kohlenstoffatomen oder eine aliphatische Kohlenwasserstoffgruppe mit 2 bis 6 Valenzen,

$R^2$      eine Alkylengruppe mit 2 bis 4 Kohlenstoffatomen,

$R^3$      eine Alkylgruppe mit 1 bis 10 Kohlenstoffatomen oder eine Acylgruppe mit 1 bis 10 Kohlenstoffatomen,

n      eine ganze Zahl von 1 bis 6 und

m      eine Zahl, für welche der Mittelwert von m x n 6 bis 80 beträgt,

das eine Viskosität bei 100°C von 2 bis 50 $mm^2$/s (cSt) aufweist.

## Revendications

**1.** Utilisation d'au moins un dérivé de poly(oxyalkylène-glycol) représenté par la formule générale

$$R^1 \!\!-\!\! [\!\!-\!\! (OR^2)_{\overline{m}}\!\!-\!\!OR^3 \quad ]_n \qquad\qquad (I)$$

dans laquelle

$R^1$      représente un groupe alkyle ayant 1 à 10 atomes de carbone, un groupe acyle ayant 1 à 10 atomes de carbone ou un groupe hydrocarboné aliphatique ayant 2 à 6 valences,

$R^2$      représente un groupe alkylène ayant 2 à 4 atomes de carbone,

$R^3$      représente un groupe alkyle ayant 1 à 10 atomes de carbone ou un groupe acyle ayant 1 à 10 atomes de carbone,

n      est un nombre entier valant de 1 à 6, et

m      est un nombre pour lequel la valeur moyenne de m x n vaut de 6 à 80,

et ayant une viscosité à 100°C allant de 2 à 50 $mm^2.s^{-1}$ (cSt), à titre de lubrifiant pour des réfrigérateurs à compression dans lesquels on utilise le 1, 1, 1, 2 - tetrafluoroéthane à titre de réfrigérant.

**2.** Utilisation selon la revendication 1, dans laquelle n vaut 1 et $R^1$ et $R^3$ représentent des groupes méthyle.

**3.** Utilisation selon la revendication 1, dans laquelle n vaut 1, m vaut au moins 12 et $R^1$ et $R^3$ représentent des groupes méthyle.

**4.** Utilisation selon la revendication 1, dans laquelle n vaut 1, m vaut au moins 14 et $R^1$ et $R^3$ représentent des groupes méthyle.

**5.** Procédé pour réaliser la lubrification dans des réfrigérateurs à compression utilisant le 1, 1, 1, 2 - tétrafluoroéthane à titre de réfrigérant, qui comprend l'utilisation, à titre de lubrifiant, d'une huile lubrifiante comprenant, à titre de composant principal, au moins un dérivé de poly(oxyalkylène-glycol) représenté par la formule générale :

$$R^1 \!\!-\!\! [\!\!-\!\! (OR^2)_{\overline{m}}\!\!-\!\!OR^3 \quad ]_n \qquad\qquad (I)$$

dans laquelle

R[1]    représente un groupe alkyle ayant 1 à 10 atomes de carbone, un groupe acyle ayant 1 à 10 atomes de carbone ou un groupe hydrocarboné aliphatique ayant 2 à 6 valences,

R[2]    représente un groupe alkylène ayant 2 à 4 atomes de carbone,

R[3]    représente un groupe alkyle ayant 1 à 10 atomes de carbone ou un groupe acyle ayant 1 à 10 atomes de carbone,

n      est un nombre entier valant de 1 à 6, et

m      est un nombre pour lequel la valeur moyenne de m x n vaut de 6 à 80,

et ayant une viscosité à 100° C comprise dans l'intervalle allant de 2 à 50 $mm^2.s^{-1}$ (cSt).

**6.**  Système de réfrigérateur à compression, qui comprend un compresseur, un réfrigérant comprenant le 1, 1, 1, 2 -tétrafluoroéthane et un lubrifiant, ledit lubrifiant étant une huile lubrifiante comprenant, à titre de composant principal, au moins un dérivé de poly(oxyalkylène-glycol) représenté par la formule générale

$$R^1 \text{---} [ \ (OR^2)_{\overline{m}} \text{---} OR^3 \ ]_n \qquad\qquad (I)$$

dans laquelle

R[1]    représente un groupe alkyle ayant 1 à 10 atomes de carbone, un groupe acyle ayant 1 à 10 atomes de carbone ou un groupe hydrocarboné aliphatique ayant 2 à 6 valences,

R[2]    représente un groupe alkylène ayant 2 à 4 atomes de carbone,

R[3]    représente un groupe alkyle ayant 1 à 10 atomes de carbone ou un groupe acyle ayant 1 à 10 atomes de carbone,

n      est un nombre entier valant de 1 à 6, et

m      est un nombre pour lequel la valeur moyenne de m x n vaut de 6 à 80,

et ayant une viscosité à 100° C allant de 2 à 50 $mm^2.s^{-1}$ (cSt).